# EUROPEAN PATENT SPECIFICATION

(11) **EP 2 918 114 B1**
(45) Date of publication and mention of the grant of the patent: **28.09.2016**
(21) Application number: 13795125.7
(22) Date of filing: 08.11.2013
(51) Int. Cl.: H04W 52/02

(54) **METHOD AND APPARATUS FOR DOWNLINK/UPLINK FLOW CONTROL IN AN HSPA+ UE USING AUTONOMOUS CONNECTED DRX MODE TRIGGERING**
VERFAHREN UND VORRICHTUNG ZUR DOWNLINK-/UPLINK-FLUSSKONTROLLE IN EINER HSPA+-BENUTZERVORRICHTUNG MIT AUTONOM VERBUNDENER DRX-MODUS-AUSLÖSUNG
PROCÉDÉ ET APPAREIL DE COMMANDE DE FLUX DE LIAISON DESCENDANTE/LIAISON MONTANTE DANS UN UE HSPA+ À L'AIDE D'UN DÉCLENCHEMENT DE MODE DRX CONNECTÉ AUTONOME

(30) Priority: 08.11.2012 US 201261724000 P; 01.07.2013 US 201313932838
(43) Date of publication of application: 16.09.2015
(73) Proprietor: Qualcomm Incorporated, San Diego, CA 92121 (US)
(72) Inventor: CHHABRA, Gurvinder Singh, San Diego, California 92121-1714 (US); KRISHNAMOORTHI, Deepak, San Diego, California 92121-1714 (US); CHANDRA, Madhup, San Diego, California 92121-1714 (US)
(74) Representative: Dunlop, Hugh Christopher
(86) International application number: PCT/US2013/069101
(87) International publication number: WO 2014/074794

(56) References cited:
- EP-A1- 2 320 692
- US-A1- 2008 181 127
- US-A1- 2010 130 137
- MIKIO IWAMURA ET AL: "Carrier aggregation framework in 3GPP LTE-advanced [WiMAX/LTE Update]", IEEE COMMUNICATIONS MAGAZINE, IEEE SERVICE CENTER, PISCATAWAY, US, vol. 48, no. 8, 1 August 2008 (2008-08-01) , pages 60-67, XP011315996, ISSN: 0163-6804
- ROHDE & SCHWARZ: "1MA121_0E: HSPA+ Technology Introduction", ROHDE & SCHWARZ APPLICATION NOTE 1MA121 , 30 July 2007 (2007-07-30), pages 1-34, XP002491731, Retrieved from the Internet: URL:http://www2.rohde-schwarz.com/en/techn ologies/?_view=downloads&downloadtype=20&t ype=20=20&downid=2548 [retrieved on 2008-08-11]

## Description

### BACKGROUND

### Field

Aspects of the present disclosure relate generally to wireless communication systems, and more particularly, to controlling the flow of data in a high speed packet access plus (HSPA+) User Equipment (UE).

### Background

Wireless communication networks are widely deployed to provide various communication services such as telephony, video, data, messaging, broadcasts, and so on. Such networks, which are usually multiple access networks, support communications for multiple users by sharing the available network resources. One example of such a network is the UMTS Terrestrial Radio Access Network (UTRAN). The UTRAN is the radio access network (RAN) defined as a part of the Universal Mobile Telecommunications System (UMTS), a third generation (3G) mobile phone technology supported by the 3rd Generation Partnership Project (3GPP). The UMTS, which is the successor to Global System for Mobile Communications (GSM) technologies, currently supports various air interface standards, such as Wideband-Code Division Multiple Access (W-CDMA), Time Division-Code Division Multiple Access (TD-CDMA), and Time Division-Synchronous Code Division Multiple Access (TD-SCDMA). The UMTS also supports enhanced 3G data communications protocols, such as High Speed Packet Access (HSPA), which provides higher data transfer speeds and capacity to associated UMTS networks. US2010/0130137A1 relates to multiple carrier utilization in wireless communications. MIKIO IWAMURA EL AL: 'Carrier aggregation framework in 3GPP LTE-advanced, IEEE COMMUNICATIONS MAGAZINE, ISSN: 0163-6804 relates to serving cell DRX control and activation/deactivation control.

As the demand for mobile broadband access continues to increase, research and development continue to advance the UMTS technologies not only to meet the growing demand for mobile broadband access, but to advance and enhance the user experience with mobile communications.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In accordance with one or more aspects and corresponding disclosure thereof, various aspects are described in connection with controlling the flow of data in a HSPA+ UE. In one example, a communications device is equipped to monitor at least one parameter related to processing data at the UE, detect that the at least one parameter has passed a threshold, and autonomously trigger a DRX mode of operation.

According to related aspects, a method for controlling the flow of data in a HSPA+ UE is provided. The method can include monitoring at least one parameter related to processing data at the UE. Further, the method can include detecting that the at least one parameter has passed a threshold. Moreover, the method may include autonomously triggering a DRX mode of operation.

Another aspect relates to a communications apparatus enabled to control the flow of data in a HSPA+ UE. The communications apparatus can include means for monitoring at least one parameter related to processing data at the UE. Further, the communications apparatus can include means for detecting that the at least one parameter has passed a threshold. Moreover, the communications apparatus can include means for autonomously triggering a DRX mode of operation.

Another aspect relates to a communications apparatus. The apparatus can include a processing system configured to monitor at least one parameter related to processing data at the UE. Further, the processing system may be configured to detect that the at least one parameter has passed a threshold. Moreover, the processing system may further be configured to autonomously trigger a DRX mode of operation.

Still another aspect relates to a computer program product, which can have a computer-readable medium including code for monitoring at least one parameter related to processing data at the UE. Further, the computer-readable medium may include code for detect that the at least one parameter has passed a threshold. Moreover, the computer-readable medium can include code for autonomously trigger a DRX mode of operation.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a block diagram illustrating an example of a hardware implementation for an apparatus employing a processing system.
FIG. 2 is a block diagram conceptually illustrating an example of a telecommunications system.
FIG. 3 is a conceptual diagram illustrating an example of an access network.
FIG. 4 is a conceptual diagram illustrating an example of a radio protocol architecture for the user and control plane.
FIG. 5 is a block diagram conceptually illustrating an example of a Node B in communication with a UE in a telecommunications system.
FIG. 6 is block diagram of an HSPA+ UE configured for autonomous DRX mode triggering.
FIGS. 7A and 7B illustrate timing diagrams showing autonomous DRX mode of operation triggering for a UE.
FIGS. 8A and 8B illustrate timing diagrams showing the termination of autonomous DRX mode.
FIG. 9 illustrates another timing diagram 900 showing the termination of autonomous DRX mode.
FIGS. 10A and 10B illustrate timing diagrams showing autonomous DRX mode of operation for a UE with one or more components.
FIG. 11 illustrates a flow diagram showing operations performed by a UE for autonomously initiating a DRX mode of operation.
FIG. 12 illustrates a block diagram of an example a communications device for autonomously initiating a DRX mode of operation, according to an aspect.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

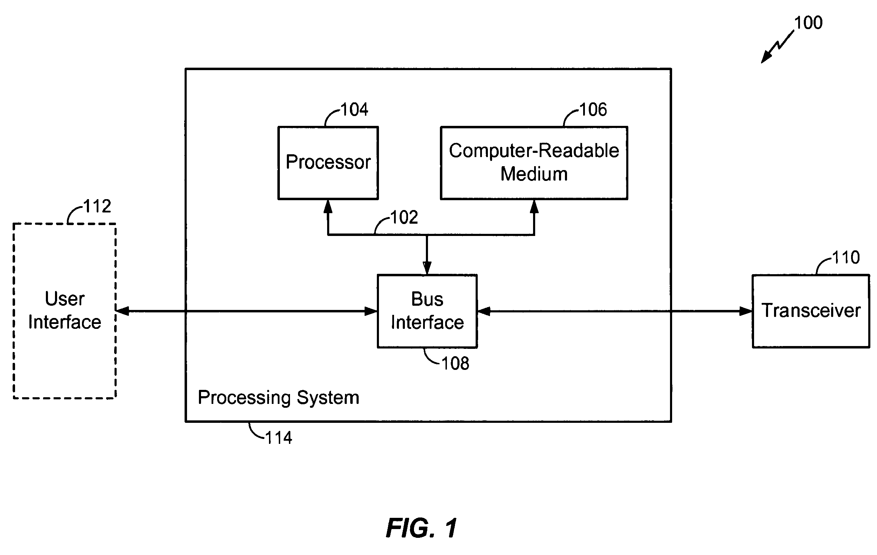

**FIG. 1** is a block diagram illustrating an example of a hardware implementation for an apparatus 100 employing a processing system 114. In this example, the processing system 114 may be implemented with a bus architecture, represented generally by the bus 102. The bus 102 may include any number of interconnecting buses and bridges depending on the specific application of the processing system 114 and the overall design constraints. The bus 102 links together various circuits including one or more processors, represented generally by the processor 104, and computer-readable media, represented generally by the computer-readable medium 106. The bus 102 may also link various other circuits such as timing sources, peripherals, voltage regulators, and power management circuits, which are well known in the art, and therefore, will not be described any further. A bus interface 108 provides an interface between the bus 102 and a transceiver 110. The transceiver 110 provides a means for communicating with various other apparatus over a transmission medium. Depending upon the nature of the apparatus, a user interface 112 (e.g., keypad, display, speaker, microphone, joystick) may also be provided.

The processor 104 is responsible for managing the bus 102 and general processing, including the execution of software stored on the computer-readable medium 106. The software, when executed by the processor 104, causes the processing system 114 to perform the various functions described infra for any particular apparatus. The computer-readable medium 106 may also be used for storing data that is manipulated by the processor 104 when executing software.

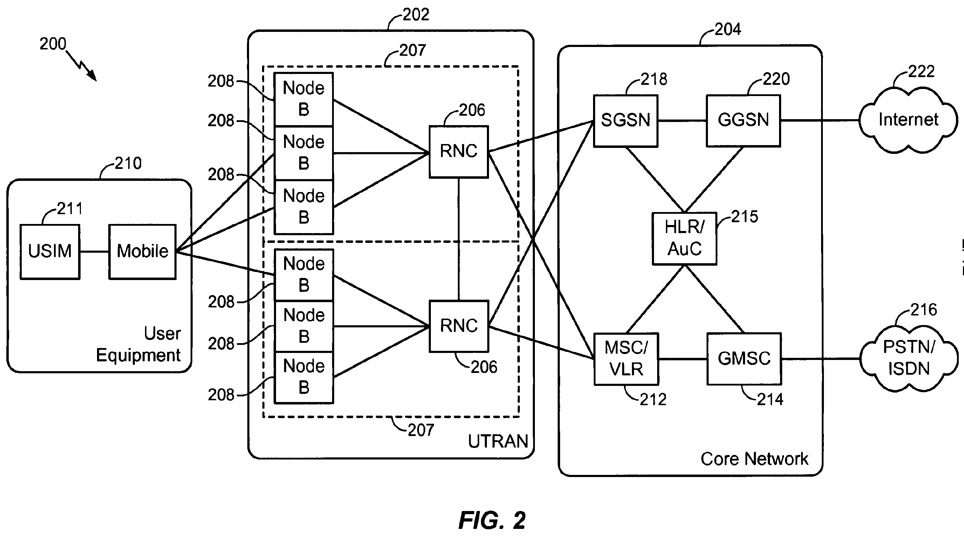

The various concepts presented throughout this disclosure may be implemented across a broad variety of telecommunication systems, network architectures, and communication standards. By way of example and without limitation, the aspects of the present disclosure illustrated in **FIG. 2** are presented with reference to a UMTS system 200 employing a W-CDMA air interface. A UMTS network includes three interacting domains: a Core Network (CN) 204, a UMTS Terrestrial Radio Access Network (UTRAN) 202, and User Equipment (UE) 210. In this example, the UTRAN 202 provides various wireless services including telephony, video, data, messaging, broadcasts, and/or other services. The UTRAN 202 may include a plurality of Radio Network Subsystems (RNSs) such as an RNS 207, each controlled by a respective Radio Network Controller (RNC) such as an RNC 206. Here, the UTRAN 202 may include any number of RNCs 206 and RNSs 207 in addition to the RNCs 206 and RNSs 207 illustrated herein. The RNC 206 is an apparatus responsible for, among other things, assigning, reconfiguring and releasing radio resources within the RNS 207. The RNC 206 may be interconnected to other RNCs (not shown) in the UTRAN 202 through various types of interfaces such as a direct physical connection, a virtual network, or the like, using any suitable transport network.

Communication between a UE 210 and a Node B 208 may be considered as including a physical (PHY) layer and a medium access control (MAC) layer. Further, communication between a UE 210 and an RNC 206 by way of a respective Node B 208 may be considered as including a radio resource control (RRC) layer. In the instant specification, the PHY layer may be considered layer 1; the MAC layer may be considered layer 2; and the RRC layer may be considered layer 3. Information hereinbelow utilizes terminology introduced in the RRC Protocol Specification, 3GPP TS 25.331 v9.1.0, incorporated herein by reference.

The geographic region covered by the RNS 207 may be divided into a number of cells, with a radio transceiver apparatus serving each cell. A radio transceiver apparatus is commonly referred to as a Node B in UMTS applications, but may also be referred to by those skilled in the art as a base station (BS), a base transceiver station (BTS), a radio base station, a radio transceiver, a transceiver function, a basic service set (BSS), an extended service set (ESS), an access point (AP), or some other suitable terminology. For clarity, three Node Bs 208 are shown in each RNS 207; however, the RNSs 207 may include any number of wireless Node Bs. The Node Bs 208 provide wireless access points to a CN 204 for any number of mobile apparatuses. Examples of a mobile apparatus include a cellular phone, a smart phone, a session initiation protocol (SIP) phone, a laptop, a notebook, a netbook, a smartbook, a personal digital assistant (PDA), a satellite radio, a global positioning system (GPS) device, a multimedia device, a video device, a digital audio player (e.g., MP3 player), a camera, a game console, or any other similar functioning device. The mobile apparatus is commonly referred to as a UE in UMTS applications, but may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a terminal, a user agent, a mobile client, a client, or some other suitable terminology. In a UMTS system, the UE 210 may further include a universal subscriber identity module (USIM) 211, which contains a user's subscription information to a network. For illustrative purposes, one UE 210 is shown in communication with a number of the Node Bs 208. The DL, also called the forward link, refers to the communication link from a Node B 208 to a UE 210, and the UL, also called the reverse link, refers to the communication link from a UE 210 to a Node B 208.

The CN 204 interfaces with one or more access networks, such as the UTRAN 202. As shown, the CN 204 is a GSM core network. However, as those skilled in the art will recognize, the various concepts presented throughout this disclosure may be implemented in a RAN, or other suitable access network, to provide UEs with access to types of CNs other than GSM networks.

The CN 204 includes a circuit-switched (CS) domain and a packet-switched (PS) domain. Some of the circuit-switched elements are a Mobile services Switching Centre (MSC), a Visitor location register (VLR) and a Gateway MSC. Packet-switched elements include a Serving GPRS Support Node (SGSN) and a Gateway GPRS Support Node (GGSN). Some network elements, like EIR, HLR, VLR and AuC may be shared by both of the circuit-switched and packet-switched domains. In the illustrated example, the CN 204 supports circuit-switched services with a MSC 212 and a GMSC 214. In some applications, the GMSC 214 may be referred to as a media gateway (MGW). One or more RNCs, such as the RNC 206, may be connected to the MSC 212. The MSC 212 is an apparatus that controls call setup, call routing, and UE mobility functions. The MSC 212 also includes a VLR that contains subscriber-related information for the duration that a UE is in the coverage area of the MSC 212. The GMSC 214 provides a gateway through the MSC 212 for the UE to access a circuit-switched network 216. The GMSC 214 includes a home location register (HLR) 215 containing subscriber data, such as the data reflecting the details of the services to which a particular user has subscribed. The HLR is also associated with an authentication center (AuC) that contains subscriber-specific authentication data. When a call is received for a particular UE, the GMSC 214 queries the HLR 215 to determine the UE's location and forwards the call to the particular MSC serving that location.

The CN 204 also supports packet-data services with a serving GPRS support node (SGSN) 218 and a gateway GPRS support node (GGSN) 220. GPRS, which stands for General Packet Radio Service, is designed to provide packet-data services at speeds higher than those available with standard circuit-switched data services. The GGSN 220 provides a connection for the UTRAN 202 to a packet-based network 222. The packet-based network 222 may be the Internet, a private data network, or some other suitable packet-based network. The primary function of the GGSN 220 is to provide the UEs 210 with packet-based network connectivity. Data packets may be transferred between the GGSN 220 and the UEs 210 through the SGSN 218, which performs primarily the same functions in the packet-based domain as the MSC 212 performs in the circuit-switched domain.

An air interface for UMTS may utilize a spread spectrum Direct-Sequence Code Division Multiple Access (DS-CDMA) system. The spread spectrum DS-CDMA spreads user data through multiplication by a sequence of pseudorandom bits called chips. The "wideband" W-CDMA air interface for UMTS is based on such direct sequence spread spectrum technology and additionally calls for a frequency division duplexing (FDD). FDD uses a different carrier frequency for the UL and DL between a Node B 208 and a UE 210. Another air interface for UMTS that utilizes DS-CDMA, and uses time division duplexing (TDD), is the TD-SCDMA air interface. Those skilled in the art will recognize that although various examples described herein may refer to a W-CDMA air interface, the underlying principles may be equally applicable to a TD-SCDMA air interface.

An HSPA air interface includes a series of enhancements to the 3G/W-CDMA air interface, facilitating greater throughput and reduced latency. Among other modifications over prior releases, HSPA utilizes hybrid automatic repeat request (HARQ), shared channel transmission, and adaptive modulation and coding. The standards that define HSPA include HSDPA (high speed downlink packet access) and HSUPA (high speed uplink packet access, also referred to as enhanced uplink, or EUL).

HSDPA utilizes as its transport channel the high-speed downlink shared channel (HS-DSCH). The HS-DSCH is implemented by three physical channels: the high-speed physical downlink shared channel (HS-PDSCH), the high-speed shared control channel (HS-SCCH), and the high-speed dedicated physical control channel (HS-DPCCH).

Among these physical channels, the HS-DPCCH carries the HARQ ACK/NACK signaling on the uplink to indicate whether a corresponding packet transmission was decoded successfully. That is, with respect to the downlink, the UE 210 provides feedback to the node B 208 over the HS-DPCCH to indicate whether it correctly decoded a packet on the downlink.

HS-DPCCH further includes feedback signaling from the UE 210 to assist the node B 208 in taking the right decision in terms of modulation and coding scheme and precoding weight selection, this feedback signaling including the CQI and PCI.

"HSPA Evolved" or HSPA+ is an evolution of the HSPA standard that includes MIMO and 64-QAM, enabling increased throughput and higher performance. That is, in an aspect of the disclosure, the node B 208 and/or the UE 210 may have multiple antennas supporting MIMO technology. The use of MIMO technology enables the node B 208 to exploit the spatial domain to support spatial multiplexing, beamforming, and transmit diversity.

Multiple Input Multiple Output (MIMO) is a term generally used to refer to multi-antenna technology, that is, multiple transmit antennas (multiple inputs to the channel) and multiple receive antennas (multiple outputs from the channel). MIMO systems generally enhance data transmission performance, enabling diversity gains to reduce multipath fading and increase transmission quality, and spatial multiplexing gains to increase data throughput.

Spatial multiplexing may be used to transmit different streams of data simultaneously on the same frequency. The data steams may be transmitted to a single UE 210 to increase the data rate or to multiple UEs 210 to increase the overall system capacity. This is achieved by spatially precoding each data stream and then transmitting each spatially precoded stream through a different transmit antenna on the downlink. The spatially precoded data streams arrive at the UE(s) 210 with different spatial signatures, which enables each of the UE(s) 210 to recover the one or more the data streams destined for that UE 210. On the uplink, each UE 210 may transmit one or more spatially precoded data streams, which enables the node B 208 to identify the source of each spatially precoded data stream.

Spatial multiplexing may be used when channel conditions are good. When channel conditions are less favorable, beamforming may be used to focus the transmission energy in one or more directions, or to improve transmission based on characteristics of the channel. This may be achieved by spatially precoding a data stream for transmission through multiple antennas. To achieve good coverage at the edges of the cell, a single stream beamforming transmission may be used in combination with transmit diversity.

Generally, for MIMO systems utilizing n transmit antennas, n transport blocks may be transmitted simultaneously over the same carrier utilizing the same channelization code. Note that the different transport blocks sent over the n transmit antennas may have the same or different modulation and coding schemes from one another.

On the other hand, Single Input Multiple Output (SIMO) generally refers to a system utilizing a single transmit antenna (a single input to the channel) and multiple receive antennas (multiple outputs from the channel). Thus, in a SIMO system, a single transport block is sent over the respective carrier.

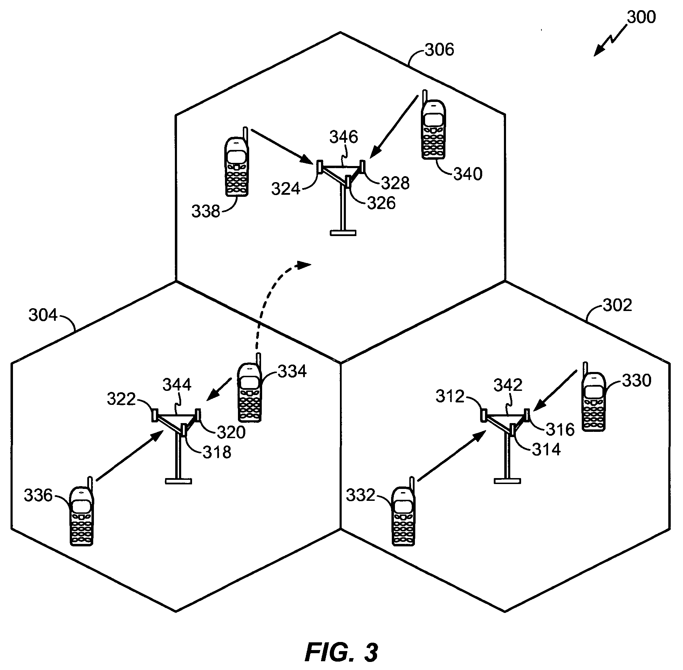

Referring to **FIG. 3****,** an access network 300 in a UTRAN architecture is illustrated. The multiple access wireless communication system includes multiple cellular regions (cells), including cells 302, 304, and 306, each of which may include one or more sectors. The multiple sectors can be formed by groups of antennas with each antenna responsible for communication with UEs in a portion of the cell. For example, in cell 302, antenna groups 312, 314, and 316 may each correspond to a different sector. In cell 304, antenna groups 318, 320, and 322 each correspond to a different sector. In cell 306, antenna groups 324, 326, and 328 each correspond to a different sector. The cells 302, 304 and 306 may include several wireless communication devices, e.g., User Equipment or UEs, which may be in communication with one or more sectors of each cell 302, 304 or 306. For example, UEs 330 and 332 may be in communication with Node B 342, UEs 334 and 336 may be in communication with Node B 344, and UEs 338 and 340 can be in communication with Node B 346. Here, each Node B 342, 344, 346 is configured to provide an access point to a CN 204 (see FIG. 2) for all the UEs 330, 332, 334, 336, 338, 340 in the respective cells 302, 304, and 306.

As the UE 334 moves from the illustrated location in cell 304 into cell 306, a serving cell change (SCC) or handover may occur in which communication with the UE 334 transitions from the cell 304, which may be referred to as the source cell, to cell 306, which may be referred to as the target cell. Management of the handover procedure may take place at the UE 334, at the Node Bs corresponding to the respective cells, at a radio network controller 206 (see FIG. 2), or at another suitable node in the wireless network. For example, during a call with the source cell 304, or at any other time, the UE 334 may monitor various parameters of the source cell 304 as well as various parameters of neighboring cells such as cells 306 and 302. Further, depending on the quality of these parameters, the UE 334 may maintain communication with one or more of the neighboring cells. During this time, the UE 334 may maintain an Active Set, that is, a list of cells that the UE 334 is simultaneously connected to (i.e., the UTRA cells that are currently assigning a downlink dedicated physical channel DPCH or fractional downlink dedicated physical channel F-DPCH to the UE 334 may constitute the Active Set).

The modulation and multiple access scheme employed by the access network 300 may vary depending on the particular telecommunications standard being deployed. By way of example, the standard may include Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. The standard may alternately be Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.11 (Wi-Fi), IEEE 802.16 (WiMAX), IEEE 802.20, and Flash-OFDM employing OFDMA. UTRA, E-UTRA, UMTS, LTE, LTE Advanced, and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

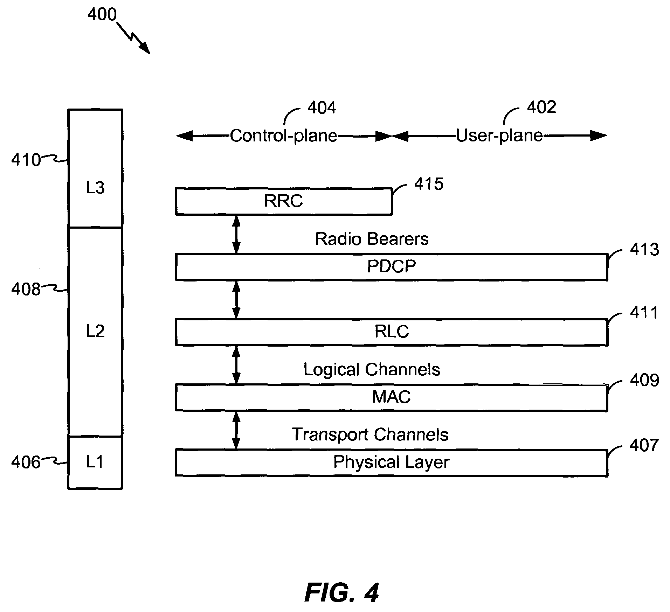

The radio protocol architecture may take on various forms depending on the particular application. An example for an HSPA system will now be presented with reference to FIG. 4.

Referring to **FIG. 4****,** an example radio protocol architecture 400 relates to the user plane 402 and the control plane 404 of a user equipment (UE) or node B/base station. For example, radio protocol architecture 400 may be included in a UE. The radio protocol architecture 400 for the UE and node B is shown with three layers: Layer 1 406, Layer 2 408, and Layer 3 410. Layer 1 406 is the lowest lower and implements various physical layer signal processing functions. As such, Layer 1 406 includes the physical layer 407. Layer 2 (L2 layer) 408 is above the physical layer 407 and is responsible for the link between the UE and node B over the physical layer 407. Layer 3 (L3 layer) 410 includes a radio resource control (RRC) sublayer 415. The RRC sublayer 415 handles the control plane signaling of Layer 3 between the UE and the UTRAN.

In the user plane, the L2 layer 408 includes a media access control (MAC) sublayer 409, a radio link control (RLC) sublayer 411, and a packet data convergence protocol (PDCP) 413 sublayer, which are terminated at the node B on the network side. Although not shown, the UE may have several upper layers above the L2 layer 408 including a network layer (e.g., IP layer) that is terminated at a PDN gateway on the network side, and an application layer that is terminated at the other end of the connection (e.g., far end UE, server, etc.).

The PDCP sublayer 413 provides multiplexing between different radio bearers and logical channels. The PDCP sublayer 413 also provides header compression for upper layer data packets to reduce radio transmission overhead, security by ciphering the data packets, and handover support for UEs between node Bs. The RLC sublayer 411 provides segmentation and reassembly of upper layer data packets, retransmission of lost data packets, and reordering of data packets to compensate for out-of-order reception due to hybrid automatic repeat request (HARQ). The MAC sublayer 409 provides multiplexing between logical and transport channels. The MAC sublayer 409 is also responsible for allocating the various radio resources (e.g., resource blocks) in one cell among the UEs. The MAC sublayer 409 is also responsible for HARQ operations.

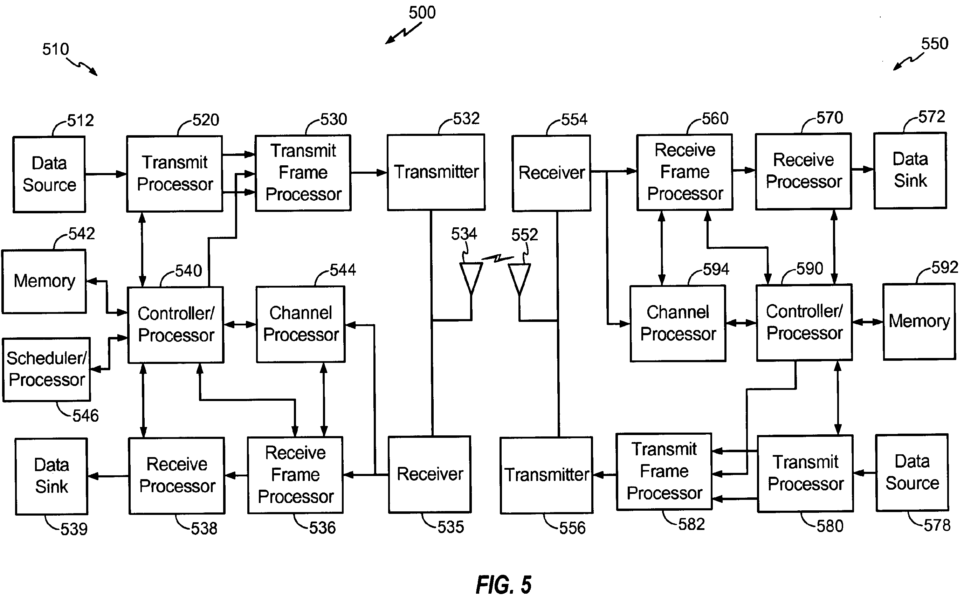

**FIG. 5** is a block diagram of a Node B 510 in communication with a UE 550, where the Node B 510 may be the Node B 208 in FIG. 2, and the UE 550 may be the UE 210 in FIG. 2. In the downlink communication, a transmit processor 520 may receive data from a data source 512 and control signals from a controller/processor 540. The transmit processor 520 provides various signal processing functions for the data and control signals, as well as reference signals (e.g., pilot signals). For example, the transmit processor 520 may provide cyclic redundancy check (CRC) codes for error detection, coding and interleaving to facilitate forward error correction (FEC), mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM), and the like), spreading with orthogonal variable spreading factors (OVSF), and multiplying with scrambling codes to produce a series of symbols. Channel estimates from a channel processor 544 may be used by a controller/processor 540 to determine the coding, modulation, spreading, and/or scrambling schemes for the transmit processor 520. These channel estimates may be derived from a reference signal transmitted by the UE 550 or from feedback from the UE 550. The symbols generated by the transmit processor 520 are provided to a transmit frame processor 530 to create a frame structure. The transmit frame processor 530 creates this frame structure by multiplexing the symbols with information from the controller/processor 540, resulting in a series of frames. The frames are then provided to a transmitter 532, which provides various signal conditioning functions including amplifying, filtering, and modulating the frames onto a carrier for downlink transmission over the wireless medium through antenna 534. The antenna 534 may include one or more antennas, for example, including beam steering bidirectional adaptive antenna arrays or other similar beam technologies.

At the UE 550, a receiver 554 receives the downlink transmission through an antenna 552 and processes the transmission to recover the information modulated onto the carrier. The information recovered by the receiver 554 is provided to a receive frame processor 560, which parses each frame, and provides information from the frames to a channel processor 594 and the data, control, and reference signals to a receive processor 570. The receive processor 570 then performs the inverse of the processing performed by the transmit processor 520 in the Node B 510. More specifically, the receive processor 570 descrambles and despreads the symbols, and then determines the most likely signal constellation points transmitted by the Node B 510 based on the modulation scheme. These soft decisions may be based on channel estimates computed by the channel processor 594. The soft decisions are then decoded and deinterleaved to recover the data, control, and reference signals. The CRC codes are then checked to determine whether the frames were successfully decoded. The data carried by the successfully decoded frames will then be provided to a data sink 572, which represents applications running in the UE 550 and/or various user interfaces (e.g., display). Control signals carried by successfully decoded frames will be provided to a controller/processor 590. When frames are unsuccessfully decoded by the receiver processor 570, the controller/processor 590 may also use an acknowledgement (ACK) and/or negative acknowledgement (NACK) protocol to support retransmission requests for those frames.

In the uplink, data from a data source 578 and control signals from the controller/processor 590 are provided to a transmit processor 580. The data source 578 may represent applications running in the UE 550 and various user interfaces (e.g., keyboard). Similar to the functionality described in connection with the downlink transmission by the Node B 510, the transmit processor 580 provides various signal processing functions including CRC codes, coding and interleaving to facilitate FEC, mapping to signal constellations, spreading with OVSFs, and scrambling to produce a series of symbols. Channel estimates, derived by the channel processor 594 from a reference signal transmitted by the Node B 510 or from feedback contained in the midamble transmitted by the Node B 510, may be used to select the appropriate coding, modulation, spreading, and/or scrambling schemes. The symbols produced by the transmit processor 580 will be provided to a transmit frame processor 582 to create a frame structure. The transmit frame processor 582 creates this frame structure by multiplexing the symbols with information from the controller/processor 590, resulting in a series of frames. The frames are then provided to a transmitter 556, which provides various signal conditioning functions including amplification, filtering, and modulating the frames onto a carrier for uplink transmission over the wireless medium through the antenna 552.

The uplink transmission is processed at the Node B 510 in a manner similar to that described in connection with the receiver function at the UE 550. A receiver 535 receives the uplink transmission through the antenna 534 and processes the transmission to recover the information modulated onto the carrier. The information recovered by the receiver 535 is provided to a receive frame processor 536, which parses each frame, and provides information from the frames to the channel processor 544 and the data, control, and reference signals to a receive processor 538. The receive processor 538 performs the inverse of the processing performed by the transmit processor 580 in the UE 550. The data and control signals carried by the successfully decoded frames may then be provided to a data sink 539 and the controller/processor, respectively. If some of the frames were unsuccessfully decoded by the receive processor, the controller/processor 540 may also use an acknowledgement (ACK) and/or negative acknowledgement (NACK) protocol to support retransmission requests for those frames.

The controller/processors 540 and 590 may be used to direct the operation at the Node B 510 and the UE 550, respectively. For example, the controller/processors 540 and 590 may provide various functions including timing, peripheral interfaces, voltage regulation, power management, and other control functions. The computer readable media of memories 542 and 592 may store data and software for the Node B 510 and the UE 550, respectively. A scheduler/processor 546 at the Node B 510 may be used to allocate resources to the UEs and schedule downlink and/or uplink transmissions for the UEs.

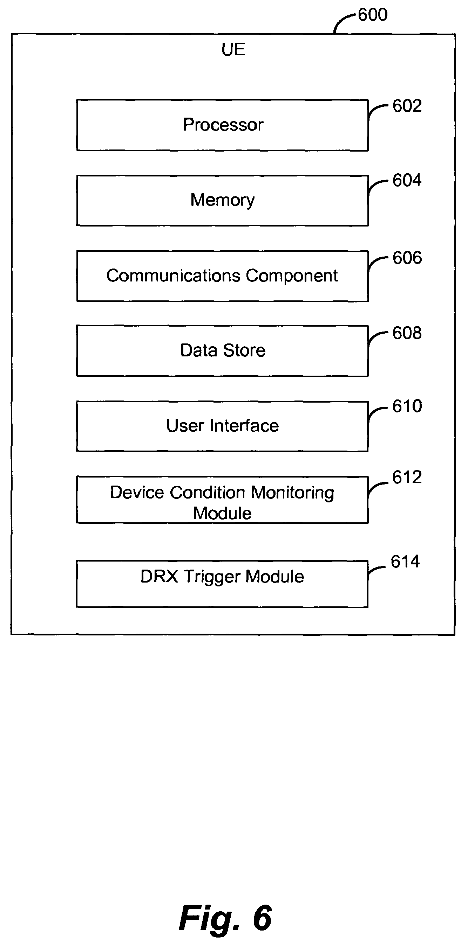

**FIG. 6** depicts an example of an HSPA+ UE 600 configured for flow control by autonomously triggering connected discontinuous reception (DRX) mode. UE 600 includes a processor 602 for carrying out processing functions associated with one or more of components and functions described herein. Processor 602 can include a single or multiple set of processors or multi-core processors. Moreover, processor 602 can be implemented as an integrated processing system and/or a distributed processing system.

UE 600 further includes a memory 604, such as for storing data used herein and/or local versions of applications being executed by processor 602. Memory 604 can include any type of memory usable by a computer, such as random access memory (RAM), read only memory (ROM), tapes, magnetic discs, optical discs, volatile memory, non-volatile memory, and any combination thereof.

Further, UE 600 includes a communications component 606 that provides for establishing and maintaining communications with one or more entities utilizing hardware, software, and services as described herein. Communications component 606 may carry communications between components on UE 600, as well as between UE 600 and external devices, such as devices located across a communications network and/or devices serially or locally connected to UE 600. For example, UE 600 may include one or more buses, and may further include transmit chain components and receive chain components associated with one or more transmitters and receivers, respectively, or one or more transceivers, operable for interfacing with external devices.

Additionally, UE 600 may further include a data store 608, which can be any suitable combination of hardware and/or software, that provides for mass storage of information, databases, and programs employed in connection with aspects described herein. For example, data store 608 may be a data repository for applications not currently being executed by processor 602.

UE 600 may additionally include a user interface component 610 operable to receive inputs from a user of UE 600, and further operable to generate outputs for presentation to the user. User interface component 610 may include one or more input devices, including but not limited to a keyboard, a number pad, a mouse, a touch-sensitive display, a navigation key, a function key, a microphone, a voice recognition component, any other mechanism capable of receiving an input from a user, or any combination thereof. Further, user interface component 610 may include one or more output devices, including but not limited to a display, a speaker, a haptic feedback mechanism, a printer, any other mechanism capable of presenting an output to a user, or any combination thereof.

The UE 600 may also include a device condition monitoring module 612 for receiving indicators from one or more condition monitoring devices, which may be internal or external to UE 600, that one or more parameters have exceed a configured threshold. For example, the monitoring devices may include a CPU monitor, temperature monitor, memory utilization monitor, and/or other types of monitors. Device condition monitoring module 612 may also be configured to receive indications that a monitored condition has recovered from the condition causing the threshold to be exceeded.

UE 600 may also include a DRX trigger module 614, which, in response to the device condition monitoring module 612 indicating that a threshold has been exceeded, causes UE 600 to enter the DRX mode of operation. In an aspect, the UE-initiated DRX mode of operation may include implementing alternate ON and OFF periods for the UE, wherein the UE may avoid transmitting and/or receiving data during the OFF periods of the DRX mode of operation to allow the UE to recover from an overload situation. In an aspect, the UE may use HSPA specification-defined DRX mode of operation configuration(s) or any other DRX mode of operation configuration(s) to suit its flow control requirements. Further, the DRX mode of operation configuration(s) may be modified to be more aggressive or less aggressive in terms of flow control. The DRX mode of operation configuration(s) used by the UE may be received from the network or locally configured and stored at the UE.

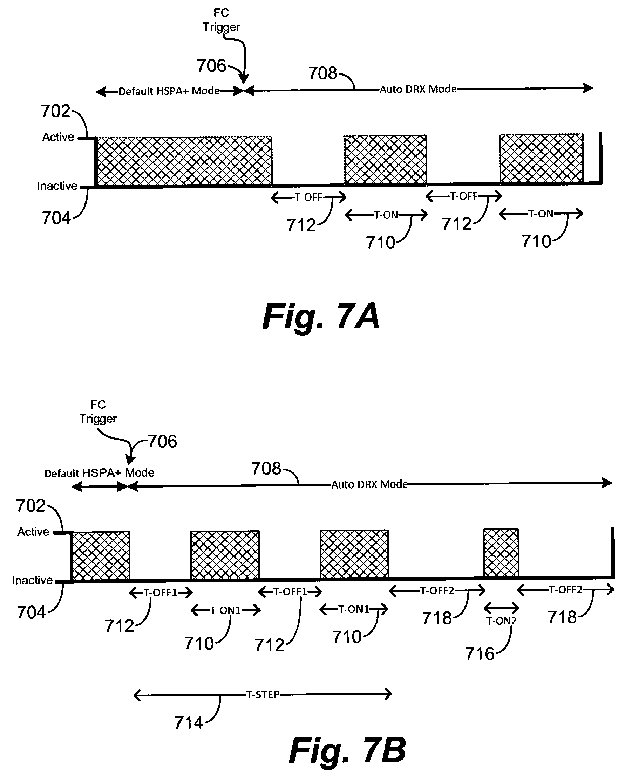

**FIG. 7A** illustrates a timing diagram showing autonomous DRX mode of operation triggering for a UE, in accordance with certain aspects of the present disclosure. Reference numeral 702 denotes an active mode for the UE and reference numeral 704 denotes an inactive mode for the UE. In an aspect, the UE substantially stops (or avoids) transmitting and/or receiving data during the inactive periods. The timing diagram assumes that the UE is already in an active default HSPA+ connected mode of operation. As shown at 706, the UE receives a flow control (FC) trigger, for example from one or more clients within the UE as noted above. As noted above, the trigger may be generated as a result of one or more device parameters passing a threshold (e.g., a configured threshold). In response to receiving the FC trigger at 706, the UE autonomously switches to an autonomous (Auto) DRX mode of operation, as shown at 708, and implements alternate ON time periods (T-ON) 710 and OFF time periods (T-OFF) 712. As shown, the UE is in the active mode during the T-ON periods 710 and in the inactive mode during the T-OFF periods 712. Thus, during this flow control (FC) triggered DRX mode of operation, the UE transmits and/or receives data only during the ON time periods, as compared to transmitting and/or receiving data continuously during the active Default HSPA+ mode of operation.

**FIG. 7B** illustrates another timing diagram showing autonomous DRX mode of operation triggering with multiple states (1 ... n, where n≥1) for a UE. As noted above, reference numeral 702 denotes an active mode for the UE and reference numeral 704 denotes an inactive mode for the UE. Further, in response to receiving the flow control (FC) trigger at 706, the UE autonomously switches to an autonomous (Auto) DRX mode of operation, as shown at 708, and implements alternate ON time periods (T-ON) 710 and OFF time periods (T-OFF) 712. In an aspect, the UE may be configured with multiple states with each state corresponding to a specific DRX mode of operation 708. In such an aspect, each state may be configured with different ON time periods and OFF time periods. For example, a state may be configured in which the OFF time periods are comparatively longer (e.g., an aggressive DRX mode of operation). In the depicted aspect in FIG. 7B, where a UE fails to recover from the FC trigger at 706, after a specific amount of time (e.g., t_step 714), a different state may be used. In the different state, the ON time period 716 may be comparatively shorter than the ON time period 710 from the previous state, and the OFF time period 718 may be comparatively longer than the OFF time period 712 from the previous state. In an aspect, each state may be associated with a time step 714 and may be initiated upon expiration of each time step 714.

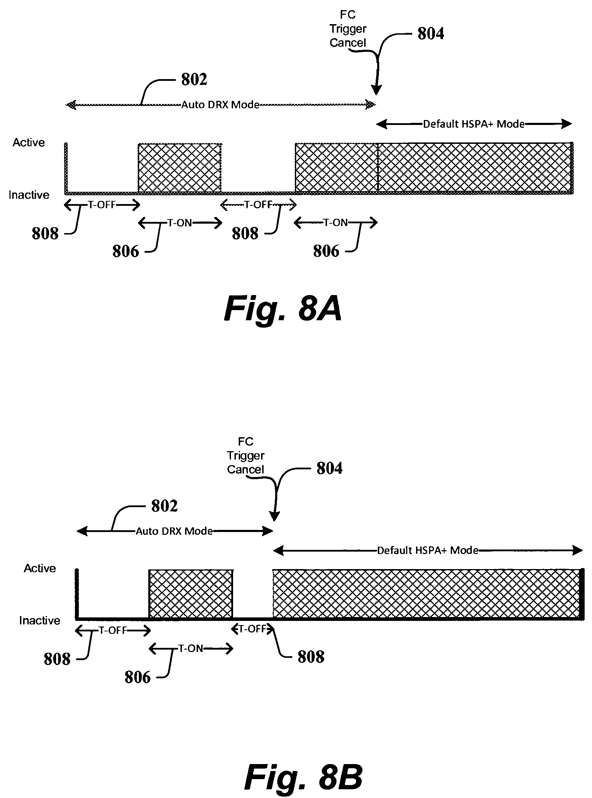

As shown in **FIGs. 8A** and **8B****,** the autonomous DRX mode of operation 802 may be canceled upon receipt of a flow control (FC) trigger cancellation request 804. As shown in FIG. 8A, the FC trigger cancellation request 804 may be received while the UE is in the active mode during a T-ON period 806. As shown in FIG. 8B, the FC trigger cancellation request 804 may be received while the UE is in an inactive mode during a T-OFF period 808. As described herein, receipt of a FC trigger cancellation request 804 may indicate that the UE has recovered from an overload condition.

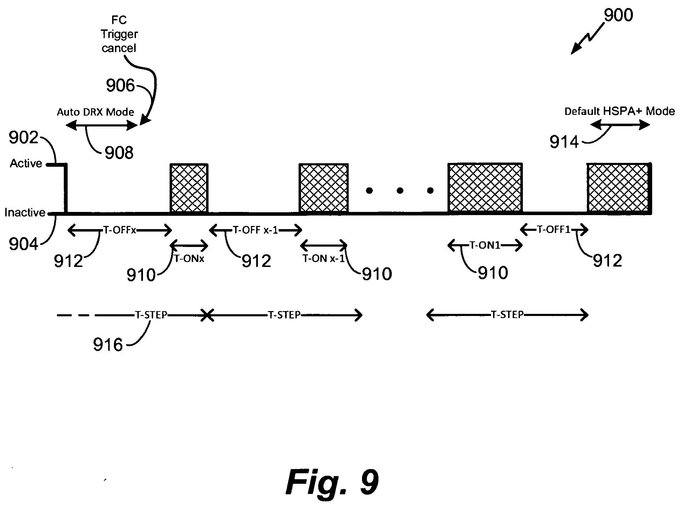

**FIG. 9** illustrates a timing diagram 900 depicting as aspect in which the autonomous DRX mode of operation 908 may be canceled upon receipt of a flow control (FC) trigger cancellation request 906 where the UE is configured with more than one state. As noted above, reference numeral 902 denotes an active mode for the UE and reference numeral 904 denotes an inactive mode for the UE. Further, during auto DRX mode 908 and prior to the completion of the switch to a default HSPA+ mode of operation 914, alternate ON time periods (T-ON) 910 and OFF time periods (T-OFF) 912 may be used. In an aspect, recovery from the flow control (FC) state (e.g., auto DRX mode) may follow a pattern of moving down one state at a time after each step timer 916 expiry until a minimum state is reached. After such a state is reached, a last step timer 916 may expire and the UE may switch to the default HSPA+ mode of operation 914.

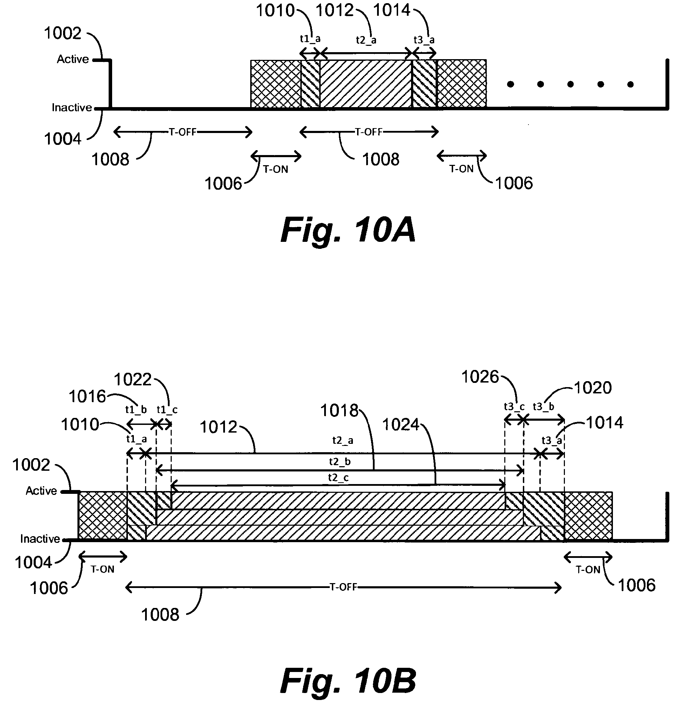

As shown in **FIGs. 10A** and **10B****,** during the autonomous DRX mode of operation, a UE may selectively turn off one or more components. In the aspects depicted in FIGS. 10A and 10B, reference numeral 1002 denotes an active mode for the UE and reference numeral 1004 denotes an inactive mode for the UE. Further, during auto DRX mode, alternate ON time periods (T-ON) 1006 and OFF time periods (T-OFF) 1008 may be used. In an aspect, the UE may turn off one or more components selectively depending, at least in part, on a duration of a OFF time period 1008 and an amount of time it takes to turn OFF/ON individual components.

For example, as depicted in 10A, an OFF time period 1008 may include sufficient time, "t1_a" 1010, to allow a component "a" to shut down and sufficient time, "t3_a" 1014 to wakeup component "a". In such an aspect, component "a" may be in an off state for the duration "t2_a" 1012, hence reducing the overall power consumption of the system.

In another aspect, as depicted in 10B, an OFF time period 1008 may include sufficient time to allow multiple components (e.g., "a", "b", "c", etc.) time to shut down "t1" (1010, 1016, 1022) and wakeup "t3" (1014, 1020, 1026). In such an aspect, each of the multiple components (e.g., "a", "b", "c", etc.) may be in an off state for the duration "t2" (1012, 1018, 1024), hence reducing the overall power consumption of the system. As shown in FIG. 10B, example components "a" and "b" may be turned ON/OFF in parallel. Further, operation of component "b" is depicted to rely on component "c" being ON, hence component "b" may be turned OFF before component "c" and turned on after component "c" (e.g., turning OFF/ON of components "b" and "c" may be serialized).

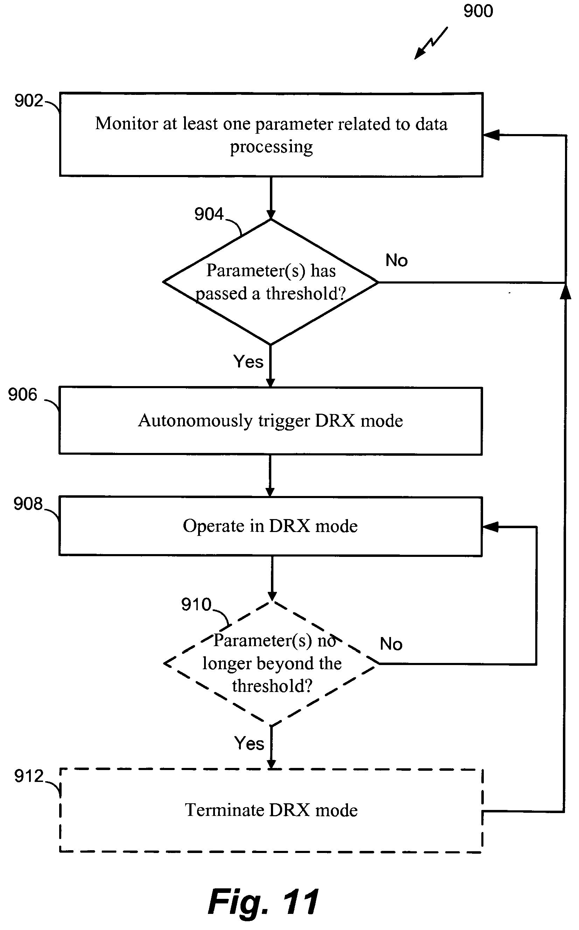

**FIG. 11** illustrates a flow diagram showing operations 1100 performed by a UE for autonomously initiating a DRX mode of operation, in accordance with certain aspects of the present disclosure.

At 1102, the UE may monitor at least one parameter related to processing data at the UE. In an aspect, the parameter may include, but is not limited to, a data rate, Central Processing Unit (CPU) utilization, memory utilization, component temperature, etc. In an aspect, the monitoring may be performed by device condition monitoring module 612, processor 602, etc., of UE 600.

At 1104, the UE may determine whether one or more of the at least one parameter has exceeded a threshold value. In an aspect, each parameter may have its own applicable threshold against which the determination may be made. In an aspect, the determination may be performed by DRX trigger module 614, processor 602, etc., of UE 600.

If at 1104, the UE determines that the at least one parameter has not exceeded the threshold, then the process may return to 1102. By contrast, if at 1104, the UE determines that the at least one parameter has exceeded the threshold, then at 1106, the UE may autonomously trigger a DRX mode of operation. In an aspect, the determination may be performed by DRX trigger module 614, processor 602, etc., of UE 600.

At 1106, the triggering of the DRX mode of operation may be implemented through various operational changes. In an aspect, as part on the DRX mode of operation trigger process, the UE may start a step timer and autonomously trigger a disparate DRX mode of operation from a set of DRX modes of operation on expiration of the step timer, if the at least one parameter remains beyond the threshold. In such an aspect, the disparate DRX mode of operation may have a shorter effective ON duration for each DRX cycle. Further, the UE may start the step timer on triggering each disparate DRX mode of operation from the set. In such an aspect, the UE may continue to step down to a next disparate DRX mode of operation from the set having a shorter effective ON period on expiration of every step timer, until the at least one parameter is no longer beyond the threshold.

At 1108, the UE may operate in a DRX mode of operation. In an aspect, the operation may be performed by device condition monitoring module 612, DRX trigger module 614, processor 602, etc., of UE 600. In an aspect, the DRX mode of operation may be implemented by alternating ON and OFF periods for the UE, the ON and OFF periods being configurable. In an aspect, the UE may avoid receiving traffic data and avoid transmitting traffic data during the OFF periods. In another aspect, during the DRX mode of operation, the UE may turn on one or more components within the UE during the ON period of the DRX mode of operation. In another aspect, the UE may also turn off one or more components within the UE during an OFF period of the DRX mode of operation. In such an aspect, turning off one or more components within the UE during an OFF period of the DRX mode of operation may include turning off two components within the UE during the OFF period serially or in parallel. Further, in another aspect, a component may be turned off during the OFF period of the DRX mode of operation, if at least a combined shut down time and turn on time for the component is less than the OFF period of the DRX mode of operation. In still another aspect, a component may be turned off during the OFF period, if at least a combined shut down time, turn on time and a configurable OFF time for the component is less than or equal to the OFF period of the DRX mode of operation. In an aspect in which the DRX mode of operation is selected from a set of DRX modes of operation, each DRX mode of operation in the set may have different configured ON and OFF periods. In such an aspect, the DRX modes of operation in the set may be arranged in the decreasing order of their ON periods.

In an optional aspect, at 1110, the UE may determine whether the at least one parameter is no longer beyond the threshold. As noted above, the determination may be performed by DRX trigger module 614, processor 602, etc., of UE 600. In an aspect in which the DRX mode of operation is a disparate mode of operation from a set of DRX modes of operation, the UE may step up to a next disparate DRX mode of operation from the set having a longer effective ON period on expiration of every step timer, until the initial DRX mode of operation is reached. In such an aspect, the UE may continue to step down to a next disparate DRX mode of operation from the set having a shorter effective ON period on expiration of every step timer, until the at least one parameter is no longer beyond the threshold. Further, in such an aspect, the order of the DRX modes of operation selected for the step downs may be the opposite to the order of the DRX modes of operation selected for the step ups.

If, in the optional aspect, at 1110 the UE determines that the at least parameters are still beyond the threshold, then the process may return to 1108 and the UE may continue to operation in a DRX mode.

If, in the optional aspect, at 1110, the UE determines that a parameter is no longer beyond the threshold, then at 1112 the UE may terminate the DRX mode of operation. In an aspect, the termination of the DRX mode of operation may be performed by DRX trigger module 614, processor 602, etc., of UE 600.

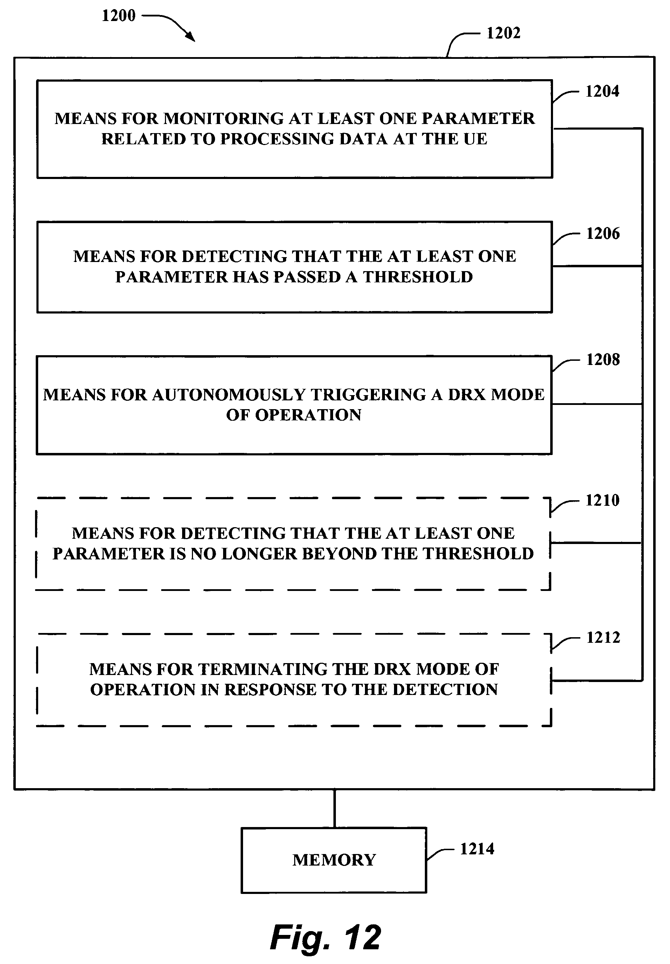

FIG. 12 depicts a block diagram of an example communication system 1200 operable to autonomously initiate a DRX mode of operation. For example, system 1200 can reside at least partially within a communications device (e.g., UE 600). It is to be appreciated that system 1200 is represented as including functional blocks, which can be functional blocks that represent functions implemented by a processor, software, or combination thereof (e.g., firmware). System 1200 includes a logical grouping 1202 of electrical components that can act in conjunction.

For instance, logical grouping 1202 can include an electrical component that may provide means for monitoring at least one parameter related to processing data at the UE 1204. For example, the means for monitoring can include communications component 606, device condition monitoring module 612, and/or processor 630 of UE 600.

Further, logical grouping 1202 can include an electrical component that may provide means for detecting that the at least one parameter has passed a threshold 1206. For example, the means for detecting 1206 can include communications component 606, device condition monitoring module 612, and/or processor 630 of UE 600.

Further, logical grouping 1202 can include an electrical component that may provide means for autonomously triggering a Discontinuous Reception (DRX) mode of operation 1208. For example, the means for triggering 1208 can include communications component 606, DRX trigger module 614, and/or processor 630 of UE 600. In an aspect, the means for triggering 1208 may be configured to turn off one or more components within the UE during an OFF period of the DRX mode of operation. In another aspect, the means for triggering 1208 may be configured to turn on the one or more components within the UE during the ON period of the DRX mode of operation. In an aspect, the means for triggering 1208 may be configured to start a step timer, and autonomously trigger a disparate DRX mode of operation from the set of DRX modes of operation on expiration of the step timer, if the at least one parameter remains beyond the threshold, wherein the disparate DRX mode of operation has a shorter effective ON duration for each DRX cycle.

In an optional aspect, logical grouping 1202 can include an electrical component that may provide means for detecting that the at least one parameter is no longer beyond the threshold 1210. As noted above, means for detecting 1210 can include communications component 606, device condition monitoring module 612, and/or processor 630 of UE 600. In an aspect, the means for detecting 1210 may be configured to detect that the at least one parameter is no longer beyond the threshold, and to allow the UE to step up to a next disparate DRX mode of operation from the set having a longer effective ON period on expiration of every step timer, until the initial DRX mode of operation is reached.

In another optional aspect, logical grouping 1202 can include an electrical component that may provide means for terminating the DRX mode of operation 1212. For example, the means for terminating 1212 can include communications component 606, DRX trigger module 614, and/or processor 630 of UE 600.

Additionally, system 1200 can include a memory 1214 that retains instructions for executing functions associated with the electrical components 1204, 1206, 1208, 1210, and 1212, and stores data used or obtained by the electrical components 1204, 1206, 1208, 1210, 1212, etc. In an aspect, memory 1214 can include memory 604 and/or can be included in memory 604. While shown as being external to memory 1214, it is to be understood that one or more of the electrical components 1204, 1206, 1208, 1210, and 1212 may exist within memory 1214. In one example, electrical components 1204, 1204, 1206, 1208, 1210, and 1212 can include at least one processor, or each electrical component 1204, 1204, 1206, 1208, 1210, and 1212 can be a corresponding module of at least one processor. Moreover, in an additional or alternative example, electrical components 1204, 1206, 1208, 1210, and 1212 may be a computer program product including a computer readable medium, where each electrical component 1204, 1206, 1208, 1210, and 1212 may be corresponding code.

Several aspects of a telecommunications system have been presented with reference to a W-CDMA system. As those skilled in the art will readily appreciate, various aspects described throughout this disclosure may be extended to other telecommunication systems, network architectures and communication standards.

By way of example, various aspects may be extended to other UMTS systems such as TD-SCDMA, High Speed Downlink Packet Access (HSDPA), High Speed Uplink Packet Access (HSUPA), High Speed Packet Access Plus (HSPA+) and TD-CDMA. The actual telecommunication standard, network architecture, and/or communication standard employed will depend on the specific application and the overall design constraints imposed on the system.

In accordance with various aspects of the disclosure, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium. The computer-readable medium may be a non-transitory computer-readable medium. A non-transitory computer-readable medium includes, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer. The computer-readable medium may also include, by way of example, a carrier wave, a transmission line, and any other suitable medium for transmitting software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects.

## Claims

1. An apparatus for wireless communication by a high speed packet access plus, HSPA+, user equipment, UE, (600), comprising:
means for monitoring (1204) at least one parameter related to processing data at the UE (600);
means for detecting (1206) that the at least one parameter has passed a threshold (612); and
means for autonomously triggering (1208) a Discontinuous Reception, DRX, mode of operation (708), **characterized by**:
the means for autonomously triggering (1208) being configured to turn off in a serialized manner at least two components within the UE (600) during an OFF period of the DRX mode of operation, wherein operation of a first component of the at least two components is configured to rely on a second component of the at least two components being ON and the first component is turned off before the second component.

2. The apparatus of claim 1, wherein the means for detecting (1206) are further configured to detect (1210) that the at least one parameter is no longer beyond the threshold (612); and further comprising:
means for terminating (1212) the DRX mode of operation (708) in response to the detection that the at least one parameter is no longer beyond the threshold.

3. The apparatus of claim 1, wherein the at least one parameter comprises at least one of: a data rate, Central Processing Unit, CPU, utilization, memory utilization, or component temperature.

4. The apparatus of claim 1, wherein the DRX mode of operation (708) comprises implementing alternating ON (710) and OFF (712) periods for the UE (600), the ON (710) and OFF (712) periods being configurable.

5. The apparatus of claim 4, wherein the UE (600) avoids receiving traffic data during the OFF (712) periods, and wherein the UE (600) avoids transmitting traffic data during the OFF (712) periods.

6. The apparatus of claim 1, wherein the means for triggering (1208) are further configured to
turn on the at least two components within the UE (600) during the ON (710) period of the DRX mode of operation (708).

7. The apparatus of claim 1, wherein a component is turned off during the OFF (712) period, if at least a combined shut down time, turn on time and a configurable OFF (712) time for the component is less than or equal to the OFF (712) period of the DRX mode of operation (708).

8. The apparatus of claim 1, wherein the DRX mode of operation (708) is selected from a set of DRX modes of operation, each DRX mode of operation (708) in the set having different configured ON (710) and OFF (712) periods.

9. The apparatus of claim 8, wherein the DRX modes of operation in the set are arranged in decreasing order of their ON (710) periods.

10. The apparatus of claim 8, wherein the means for triggering (1208) are further configured to:
start a step timer (714); and
autonomously trigger a disparate DRX mode of operation (708) from the set of DRX modes of operation on expiration of the step timer (714), if the at least one parameter remains beyond the threshold, wherein the disparate DRX mode of operation (708) has a shorter effective ON (710) duration for each DRX cycle.

11. The apparatus of claim 10, wherein the UE (600) starts the step timer (714) on triggering each disparate DRX mode of operation (708) from the set, and wherein the UE (600) continues to step down to a next disparate DRX mode of operation (708) from the set having a shorter effective ON (710) period on expiration of every step timer (714), until the at least one parameter is no longer beyond the threshold.

12. The apparatus of claim 11, wherein the means for detecting (1206) are further configured to:
detect (1210) that the at least one parameter is no longer beyond the threshold, wherein the UE (600) steps up to the next disparate DRX mode of operation (708) from the set having a longer effective ON (710) period on expiration of every step timer (714), until the initial DRX mode of operation (708) is reached, wherein the order of the DRX modes of operation selected for the step downs is opposite to the order of the DRX modes of operation selected for the step ups.

13. A method of wireless communication by a high speed packet access plus, HSPA+, user equipment, UE, (600), comprising:
monitoring (902) at least one parameter related to processing data at the UE (600);
detecting (904) that the at least one parameter has passed a threshold; and
autonomously triggering (906) a Discontinuous Reception, DRX, mode of operation, **characterized by**:
turning off in a serialized manner at least two components within the UE (600) during an OFF period of the DRX mode of operation, wherein operation of a first component of the at least two components is configured to rely on a second component of the at least two components being ON and the first component is turned off before the second component.

## Patentansprüche

1. Eine Vorrichtung zur Drahtloskommunikation durch eine HSPA+- Nutzereinrichtung bzw. -UE (HSPA+ = high speed packet access plus, UE = user equipment) (600), die Folgendes aufweist:
Mittel zum Überwachen (1204) wenigstens eines Parameters, der mit einer Verarbeitung von Daten an der UE (600) in Beziehung steht;
Mittel zum Detektieren (1206), dass der wenigstens eine Parameter einen Schwellenwert (612) überschritten hat; und
Mittel zum autonomen Auslösen (1208) eines Betriebsmodus mit diskontinuierlichem Empfang bzw. eines DRX-Betriebsmodus (708), **dadurch gekennzeichnet, dass**:
die Mittel zum autonomen Auslösen (1208) konfiguriert sind zum Abschalten, in einer seriellen Weise, von wenigstens zwei Komponenten innerhalb der UE (600) während einer AUS-Periode des DRX-Betriebsmodus, wobei der Betrieb einer ersten Komponente der wenigstens zwei Komponenten konfiguriert ist, sich darauf zu verlassen, dass eine zweite Komponente der wenigstens zwei Komponenten AN ist und die erste Komponente vor der zweiten Komponente abgeschaltet wird.

2. Vorrichtung nach Anspruch 1, wobei die Mittel zum Detektieren (1206) weiter konfiguriert sind zum Detektieren (1210), dass der wenigstens eine Parameter nicht mehr über dem Schwellenwert (612) liegt; und die weiter Folgendes aufweist:
Mittel zum Beenden (1212) des DRX-Betriebsmodus (708) ansprechend auf die Detektion, dass der wenigstens eine Parameter nicht mehr über dem Schwellenwert liegt.

3. Vorrichtung nach Anspruch 1, wobei der wenigstens einen Parameter wenigstens eines von Folgendem aufweist: eine Datenrate, eine zentrale Verarbeitungseinheit bzw. CPU (CPU = central processing unit), Nutzung bzw. Auslastung, Speichernutzung bzw. -auslastung oder Komponententemperatur.

4. Vorrichtung nach Anspruch 1, wobei der DRX-Betriebsmodus (708) Implementieren von alternierenden AN-Perioden (710) und AUS-Perioden (712) für die UE (600) aufweist, wobei die AN-Perioden (710) und die AUS-Perioden (712) konfigurierbar sind.

5. Vorrichtung nach Anspruch 4, wobei die UE (600) Empfangen von Verkehrsdaten während der AUS-Perioden (712) vermeidet, und wobei die UE (600) Senden von Verkehrsdaten während der AUS-Perioden (712) vermeidet.

6. Vorrichtung nach Anspruch 1, wobei die Mittel zum Auslösen (1208) weiter konfiguriert sind zum
Anschalten der wenigstens zwei Komponenten innerhalb der UE (600) während der AN-Periode (710) des DRX-Betriebsmodus (708).

7. Vorrichtung nach Anspruch 1, wobei eine Komponente während der AUS-Periode (712) abgeschaltet ist, wenn eine kombinierte Abschaltzeit, Anschaltzeit und eine konfigurierbare AUS-Zeit (712) für die Komponente kleiner ist oder gleich der AUS-Periode (712) des DRX-Betriebsmodus (708).

8. Vorrichtung nach Anspruch 1, wobei der DRX-Betriebsmodus (708) aus einem Satz von DRX-Betriebsmodi ausgewählt ist, wobei jeder DRX-Betriebsmodus (708) in dem Satz unterschiedlich konfigurierte AN-Perioden (710) und AUS-Perioden (712) hat.

9. Vorrichtung nach Anspruch 8, wobei die DRX-Betriebsmodi in dem Satz in einer abnehmenden Reihenfolge ihrer AN-Perioden (710) angeordnet sind.

10. Vorrichtung nach Anspruch 8, wobei die Mittel zum Auslösen (1208) weiter konfiguriert sind zum:
Starten eines Stufen-Timers (714); und
autonomen Auslösen eines disparaten bzw. gänzlich verschiedenen DRX-Betriebsmodus (708) aus dem Satz von DRX-Betriebsmodi auf den Ablauf des Stufen-Timers (714) hin, wenn der wenigstens eine Parameter unter dem Schwellenwert bleibt, wobei der disparate DRX-Betriebsmodus (708) eine kürzere effektive AN-Dauer (710) für jeden DRX-Zyklus hat.

11. Vorrichtung nach Anspruch 10, wobei die UE (600) den Stufen-Timer (714) beim Auslösen jedes disparaten DRX-Betriebsmodus (708) aus dem Satz startet, und wobei die UE (600) damit fortfährt eine Stufe nach unten, zu einem nächsten disparaten DRX-Betriebsmodus (708) aus dem Satz zu schalten, der eine kürzere effektive AN-Periode (710) hat, und zwar bei Ablauf jedes Stufen-Timers (714), bis der wenigstens eine Parameter nicht länger über dem Schwellenwert liegt.

12. Vorrichtung nach Anspruch 11, wobei die Mittel zum Detektieren (1206) weiter konfiguriert sind zum:
Detektieren (1210), dass der wenigstens eine Parameter nicht länger über dem Schwellenwert liegt, wobei die UE (600) eine Stufe nach oben zu dem nächsten disparaten DRX-Betriebsmodus (708) aus dem Satz schaltet, der eine längere effektive AN-Periode (710) hat, und zwar bei Ablauf jedes Stufen-Timers (714), bis der anfängliche DRX-Betriebsmodus (708) erreicht ist, wobei die Reihenfolge der DRX-Betriebsmodi, die für die Schritte nach unten ausgewählt sind, entgegengesetzt ist zu der Reihenfolge der DRX-Betriebsmodi, die für die Schritte nach oben ausgewählt sind.

13. Ein Verfahren zur Drahtloskommunikation durch eine HSPA+-Nutzereinrichtung bzw. -UE (HSPA+ = high speed packet access plus, UE = user equipment) (600), das Folgendes aufweist:
Überwachen (902) wenigstens eines Parameters, der sich auf ein Verarbeiten von Daten an der UE (600) bezieht;
Detektieren (904), dass der wenigstens eine Parameter einen Schwellenwert überschritten hat; und
autonomes Auslösen (906) eines Betriebsmodus mit diskontinuierlichem Empfang bzw. eines DRX-Betriebsmodus, **gekennzeichnet durch**:
Abschalten, in einer seriellen Weise, von wenigstens zwei Komponenten innerhalb der UE (600) während einer AUS-Periode des DRX-Betriebsmodus, wobei der Betrieb einer ersten Komponente der wenigstens zwei Komponenten konfiguriert ist, sich darauf zu verlassen, dass eine zweite Komponente der wenigstens zwei Komponenten AN ist und die erste Komponente vor der zweiten Komponente abgeschaltet wird.

## Revendications

1. Un appareil de communication sans fil par un équipement d'utilisateur, UE, d'accès par paquets à haut débit plus, HSPA+, (600), comprenant :
un moyen de surveillance (1204) d'au moins un paramètre relatif à un traitement de données au niveau de l'UE (600),
un moyen de détection (1206) que le au moins un paramètre a dépassé un seuil (612), et
un moyen de déclenchement autonome (1208) d'un mode de fonctionnement en réception discontinue, DRX, (708), **caractérisé en ce que** :
le moyen de déclenchement autonome (1208) est configuré de façon à désactiver de manière en série au moins deux composants à l'intérieur de l'UE (600) au cours d'une période d'inactivité du mode de fonctionnement DRX, où le fonctionnement d'un premier composant des au moins deux composants est configuré de façon à s'appuyer sur le fait qu'un deuxième composant des au moins deux composants est activé, et le premier composant est désactivé avant le deuxième composant.

2. L'appareil selon la Revendication 1, où le moyen de détection (1206) est configuré en outre de façon à détecter (1210) que le au moins un paramètre ne se situe plus au-delà du seuil (612), et comprenant en outre :
un moyen de terminaison (1212) du mode de fonctionnement DRX (708) en réponse à la détection que le au moins un paramètre ne se situe plus au-delà du seuil.

3. L'appareil selon la Revendication 1, où le au moins un paramètre comprend au moins un élément parmi : un débit de données, une utilisation d'une unité centrale, CPU, une utilisation d'une mémoire ou une température d'un composant.

4. L'appareil selon la Revendication 1, où le mode de fonctionnement DRX (708) comprend la mise en oeuvre de périodes d'activité (710) et d'inactivité (712) alternées pour l'UE (600), les périodes d'activité (710) et d'inactivité (712) étant configurables.

5. L'appareil selon la Revendication 4, où l'UE (600) évite la réception de données de trafic au cours des périodes d'inactivité (712) et où l'UE (600) évite la transmission de données de trafic au cours des périodes d'inactivité (712).

6. L'appareil selon la Revendication 1, où le moyen de déclenchement (1208) est configuré en outre de façon à
activer les au moins deux composants à l'intérieur de l'UE (600) au cours de la période d'activité (710) du mode de fonctionnement DRX (708).

7. L'appareil selon la Revendication 1, où un composant est désactivé au cours de la période d'inactivité (712) si au moins un temps de mise à l'arrêt, un temps de mise route et un temps d'inactivité configurable (712) combinés pour le composant est inférieur ou égal à la période d'inactivité (712) du mode de fonctionnement DRX (708).

8. L'appareil selon la Revendication 1, où le mode de fonctionnement DRX (708) est sélectionné à partir d'un ensemble de modes de fonctionnement DRX, chaque mode de fonctionnement DRX (708) dans l'ensemble possédant des périodes d'activité (710) et d'inactivité (712) configurées différentes.

9. L'appareil selon la Revendication 8, où les modes de fonctionnement DRX dans l'ensemble sont agencés en ordre décroissant de leurs périodes d'activité (710).

10. L'appareil selon la Revendication 8, où le moyen de déclenchement (1208) est configuré en outre à :
démarrer un chronomètre (714), et
déclencher de manière autonome un mode de fonctionnement DRX disparate (708) à partir de l'ensemble de modes de fonctionnement DRX à l'expiration du chronomètre (714) si le au moins un paramètre demeure au-delà du seuil, où le mode de fonctionnement DRX disparate (708) possède une durée d'activité (710) effective plus courte pour chaque cycle DRX.

11. L'appareil selon la Revendication 10, où l'UE (600) démarre le chronomètre (714) au moment du déclenchement de chaque mode de fonctionnement DRX disparate (708) à partir de l'ensemble, et où l'UE (600) continue en descendant vers un mode de fonctionnement DRX disparate suivant (708) de l'ensemble possédant une période d'activité (710) effective plus courte à l'expiration de chaque chronomètre (714) jusqu'à ce que le au moins un paramètre ne se situe plus au-delà du seuil.

12. L'appareil selon la Revendication 11, où le moyen de détection (1206) est configuré en outre à :
détecter (1210) que le au moins un paramètre ne se situe plus au-delà du seuil, où l'UE (600) monte vers le mode de fonctionnement DRX disparate suivant (708) de l'ensemble possédant une période d'activité (710) effective plus longue à l'expiration de chaque chronomètre (714) jusqu'à ce que le mode de fonctionnement DRX initial (708) soit atteint, où l'ordre des modes de fonctionnement DRX sélectionnés pour les descentes est opposé à l'ordre des modes de fonctionnement DRX sélectionnés pour les montées.

13. Un procédé d'une communication sans fil par un équipement d'utilisateur, UE, d'accès par paquets à haut débit plus, HSPA+, (600), comprenant :
la surveillance (902) d'au moins un paramètre relatif à un traitement de données au niveau de l'UE (600),
la détection (904) que le au moins un paramètre a dépassé un seuil, et
le déclenchement autonome (906) d'un mode de fonctionnement en réception discontinue, DRX, **caractérisé par** :
la désactivation de manière en série d'au moins deux composants à l'intérieur de l'UE (600) au cours d'une période d'inactivité du mode de fonctionnement DRX, où le fonctionnement d'un premier composant des au moins deux composants est configuré de façon à s'appuyer sur le fait qu'un deuxième composant des au moins deux composants est activé, et le premier composant est désactivé avant le deuxième composant.
